# EUROPEAN PATENT APPLICATION

(11) **EP 4 815 241 A1**
(43) Date of publication of application: **30.09.2026**
(21) Application number: 25167106.1
(22) Date of filing: 28.03.2025
(51) Int. Cl.: H02J 3/18, H02J 3/24, H02M 7/66

(54) **IMPEDANCE AND ADMITTANCE ESTIMATION VIA AN HT (HYBRID TRANSFORMER)**

(71) Applicant: Hitachi Energy Ltd, 8050 Zürich (CH)
(72) Inventor: ALVES, Roberto, 722 14 Västerås (SE); TAYYEBI, Ali, 723 59 Västerås (SE); MOGOROVIC, Marko, 1205 Geneva (CH); KHAN, Akif Zia, 31-416 Krakow (PL); CAL, Jerzy, 94-056 Lodz (PL); ROSSELET, Adrien, 1004 Lausanne (CH)
(74) Representative: Vossius & Partner Patentanwälte Rechtsanwälte mbB

(57) **Abstract**

The disclosure provides a method for controlling a hybrid transformer, HT, comprising an electric line with a plurality of phases, a first transformer connected to the electric line in series, and a converter module connected on a first side to the electric line in shunt, and a second side of the converter module, opposite to the first side, being connected to the first transformer; wherein the converter module comprises a shunt connected converter with an alternating current, AC, side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link, the method comprising: generating one or more electric perturbations in the electric line; obtaining: a first voltage of the electric line at a first point of common coupling, PCC, where the shunt connected converter module is connected to the electric line in shunt, wherein the first voltage is influenced by the one or more electric perturbations, a second voltage of the electric line at a second PCC, where the first transformer is connected to the electric line, wherein the second voltage is influenced by the one or more electric perturbations, and/or a first current of the electric line at the second PCC, wherein the first current is influenced by the one or more electric perturbations; and determining an impedance and/or an admittance based on at least one of the one or more electric perturbations, and the obtained one or more of the first voltage, the second voltage and the first current.

## Description

The present disclosure relates to method for controlling a hybrid transformer (HT) and an HT system.

Driven by the climate change concerns, the power system has been transitioning to net-zero state in recent years. This transition is highlighted by the replacement of synchronous machines by power-electronics-based converters and systems. An indirect implication of removing synchronous machines from the power system is the fact that the hierarchal grid control is changing from a centralized to a distributed configuration. Therefore, not only the generators but also other grid components are expected to provide certain stabilizing services to the grid. In this disclosure, it is focused, inter alia, on a Hybrid Transformer (HT or power-electronics enhanced transformer (PEET)) and highlight its application for impedance and admittance estimation. In this disclosure, it is intended to use HT control degrees of freedom in different configurations of the distribution network for impedance/admittance estimation as an additional functionality of the device.

The network impedance in the stability analysis of grid-connected converters may be known. However, especially in meshed distribution networks, it is crucial to distinguish the feeder impedance from the overall network impedance to assess the power transfer and overload capabilities. The characteristics of converter-dominated grid is inherently time-varying due to the time-varying nature of RES. In this disclosure, it is shown how the HT as an all-in-one solution can provide impedance/admittance estimation feature which can be exploited to enhance the performance and robustness of different power grid controls. The estimated impedance and admittance characteristic are often utilized for control and protection design, as well as the load flow computation and deriving the optimal power flow for the distribution grids.

Impedance/admittance estimation systems and methods based on the HT concept are disclosed. This is particularly interesting for renewable/electricity dominated power grids that exhibit time-varying characteristics.

The above-mentioned disadvantages are at least partly overcome and/or advantages mentioned herein are at least partly achieved with the features of the independent claims. Dependent claims define preferred embodiments of the present disclosure.

The present disclosure shows a method for controlling a hybrid transformer (HT) and an HT system.

The present disclosure relates to a method for controlling a hybrid transformer, HT, comprising an electric line with a plurality of phases, a first transformer connected to the electric line in series, and a converter module connected on a first side to the electric line in shunt, and a second side of the converter module, opposite to the first side, being connected to the first transformer; wherein the converter module comprises a shunt connected converter with an alternating current (AC) side which is the first side of the converter module, and the converter module further comprises a series connected converter with an AC side of the series connected converter which is the second side of the converter module, wherein a direct current (DC) side of the shunt connected converter is connected to a DC side of the series connected converter by a DC link, the method comprising: generating one or more electric perturbations in the electric line; obtaining: a first voltage of the electric line at a first point of common coupling (PCC) where the shunt connected converter module is connected to the electric line in shunt, wherein the first voltage is influenced by the one or more electric perturbations, a second voltage of the electric line at a second PCC, where the first transformer is connected to the electric line, wherein the second voltage is influenced by the one or more electric perturbations, and/or a first current of the electric line at the second PCC, wherein the first current is influenced by the one or more electric perturbations; and determining an impedance and/or an admittance based on at least one of the one or more electric perturbations, and the obtained one or more of the first voltage, the second voltage and the first current.

This method may be employed for impedance and/or admittance determination, preferably estimation, and for the use of HTs throughout power grids. The proposed method may be used for HT applications in medium voltage (MV), in high voltage (HV) and/or low voltage (LV) applications. The HV/MV/LV application may be that the electric line is in HV/MV/LV, respectively, and/or that the electric line is part of a power grid in HV/MV/LV, respectively. The method can enhance the functionalities of an HT to provide impedance and/or admittance information, like an estimation in real time.

Obtaining the first voltage, second voltage and/or first current may be done by measuring, estimating, calculating and/or receiving. The first current may be calculated by a current at the first PCC and a current injected by the shunt connected converter (possibly via a second transformer, described later). When the first voltage, second voltage and/or first current are measured, corresponding measurement devices may be present at the corresponding first/second PCC. The first voltage, second voltage and/or first current may be time series data.

The first voltage, the second voltage and/or the first current may be data of all phases of the electric line. The first voltage, the second voltage and/or the first current may be data of at least one phase of the electric line. In balanced conditions, data of other phases may be constructed based on single phase data. The first voltage, the second voltage and/or the first current are influenced by the one or more (generated) electric perturbations. The first voltage, the second voltage and/or the first current may be obtained temporally after, preferably a moment after, the one or more electric perturbations (short: perturbations) are generated. The perturbations may be current and/or voltage perturbations.

When the perturbations are generated, they are preferably introduced (are preferably injected) into the electric line. The perturbation may be introduced through the shunt and series connection by the shunt connected converter and series connected converter, respectively.

The connections mentioned may each be direct (only conductor and/or node(s) in between) or indirect (further electrical elements are connected in between).

The plurality of phases of the electric line may be three phases or another number of phases. In this disclosure, generally three phases are mentioned. This could be exchanged with another number of phases bigger than one. The first PCC and the second PCC, each, may have three phases. Preferably, one HT may balance all three phases as a three-phase converter.

The HT may be a device connected to the distribution network. In some embodiments, the HT may be connected to two networks, for example, MV and LV networks or HV and LV networks. The HT may contribute to balancing both networks. The HT may contribute to balance electrical quantities in both grids. A network may be the same as a grid.

The first transformer may also be referred to as trimming transformer (TT). The first voltage may be referred to as grid voltage. The second voltage may be referred to as load voltage. The first current may be referred to as load current.

The DC link connecting the DC side of the shunt connected converter to the DC side of the series connected may constitute a back-to-back connection of the shunt connected converter and the series connected converter.

The HT and controlling the HT provides a possibility for determining impedance and/or admittance. Additionally or alternatively, the HT and controlling the HT provides a possibility for monitoring impedance and/or admittance. Further, PEET application may be extended, and/or cost may be reduced. The HT may act as a decentralized measuring device. The network control may be enhanced in performance and robustness with such an HT and method. The HT and method may be applied in multi-vendor grid operations. Protection performance and reliability and availability may be enhanced.

The impedance and/or admittance at any point in an electrical network can change dynamically depending on the operating state of the network, its performance and its loads. Therefore, it the HT is especially advantageous as local and decentralized impedance and/or admittance measuring device.

Various embodiments may preferably implement the following features.

Preferably, the one or more electric perturbations are a sequence of perturbations, and wherein each perturbation of the sequence of perturbations has a different frequency.

The perturbations may be in line voltage and/or in line current of one or more phases of the electric line.

The amplitude of each of the sequence of perturbation may be the same. In some embodiments, the amplitude may differ. Especially by differing amplitudes, the obtained data (first voltage, second voltage and/or first current) can be normalized with respect to the amplitude of the perturbation influencing them. The frequency behavior may not be affected by normalizing, the perturbations and/or measurement signals.

The perturbations of the sequence of perturbations having a different frequency may be at the different frequencies of 500 Hertz (Hz) to 1000 Hz, or 0 Hz to 1000 Hz, or a few Hz to 1000 Hz, or in a different range. A sequence of intermediate frequencies may be included within the range.

The perturbations may be one or more current injections, preferably injected using the shunt connected converter. Alternatively, the perturbations may be one or more voltage injections, preferably injected using the series connected converter. A frequency spectrum scan may be performed by designing appropriate perturbation signals.

Preferably, the one or more electric perturbations have a magnitude of 5% or less of a converter rating of the shunt connected converter and/or the series connected converter.

In embodiments, the amplitude of the perturbations is smaller, preferably significantly smaller than the converter rating. Instead of 5% or less, the magnitude may be 10% or less, or 2% or less, or 1% or less, or 0.5% or less of the converter rating or of the system voltage/current amplitude.

Preferably, the method further comprises: providing the determined impedance and/or admittance to another device different to the HT; and controlling a grid to which the HT and the another device are connected by the another device based on the provided (estimated) impedance and/or admittance.

The another device may be a microgrid controller, a RES (renewable energy system) controller, renewable generator, a network controller, a distribution system operator, a transmission system operator, another HT (or another HT system) or another grid asset from outside the HT system (short: outside). Preferably, the another device is configured to influence the grid, preferably based on the provided (determined) impedance and/or admittance. The another device may use the provided impedance and/or admittance, possibly estimations thereof, to control the grid. Controlling the grid may be power flow optimization and/or flow management and/or simulating the system.

Preferably, the shunt connected converter is connected to the electric line in shunt by being connected to a second transformer which is connected to the electric line in shunt.

In such a case, the injected current is the current output from the second transformer to the electric line. The injected current is influenced by the current and/or voltage provided from the shunt connected converter to the second transformer. The second transformer may be comprised by the HT.

Preferably, a distribution transformer (DT) is connected to the electric line on a side opposite to the first transformer of where the shunt connected converter is connected in shunt.

This may mean that the order of the components along the electric line is: distribution transformer, shunt connection of shunt connected converter, first transformer. The distribution transformer may be not part of the HT.

The impedance and/or admittance is determined based on at least one of the one or more electric perturbations, and the obtained one or more of the first voltage, the second voltage and the first current.

Preferably, generating one or more electric perturbations in the electric line is done via the shunt connected converter, wherein the one or more electric perturbations are one or more current injections; and wherein determining the impedance is based only on the obtained first voltage and/or second voltage, and a current information.

The current information may be the one or more current injection, a magnitude of the one or more current injection, or the first current.

Preferably, generating one or more electric perturbations in the electric line is done via the series connected converter, wherein the one or more electric perturbations are one or more voltage injections; and wherein determining the admittance is based only on the obtained first current and a voltage information.

The voltage information may be the one or more voltage injection, a magnitude of the one or more voltage injection, the first voltage, or the second voltage.

The present disclosure also relates to a computer program comprising instructions which, when the computer program is executed by a computer, cause the computer to carry out the described method.

The computer program may run on the controller. The controller may be a processor, a computer, a server, and/or a raspberry pi, and/or the like.

The present disclosure also relates to a hybrid transformer, HT, system comprising: an electric line with a plurality of phases; a first transformer connected to the electric line in series; a converter module connected on a first side to the electric line in shunt, and on a second side of the converter module, opposite to the first side, to the first transformer; and a controller; wherein the converter module comprises a shunt connected converter with an alternating current (AC); side which is the first side of the converter module, and the converter module further comprises a series connected converter with an AC side of the series connected converter which is the second side of the converter module, wherein a direct current (DC) side of the shunt connected converter is connected to a DC side of the series connected converter by a DC link; wherein the controller is configured to: generate one or more electric perturbations in the electric line; obtain a first voltage of the electric line at a first point of common coupling (first PCC) where the shunt connected converter module is connected to the electric line in shunt, wherein the first voltage is influenced by the one or more electric perturbations, a second voltage of the electric line at a second point of common coupling (second PCC) where the first transformer is connected to the electric line, wherein the second voltage is influenced by the one or more electric perturbations, and/or a first current of the electric line at the second PCC, wherein the first current is influenced by the one or more electric perturbations; and determine an impedance and/or an admittance based on the one or more electric perturbations, and the obtained one or more of the first voltage, the second voltage and the first current.

The HT may be used for many different purposes including the described impedance and/or admittance estimation. Therefore, one HT may replace a plurality of other devices. Also, the HT may use a reduced number of modules compared to other solutions.

Preferably, the shunt connected converter is connected to the electric line in shunt by being connected to a second transformer which is connected to the electric line in shunt. The second transformer may be comprised by the HT.

Preferably, a distribution transformer is connected to the electric line on a side opposite to the first transformer of where the shunt connected converter is connected in shunt.

Preferably, the HT system comprises further a DC/DC converter connected to the DC link in series or in shunt. This connection in shunt may be either directly or by the means of a separate DC-DC converter.

Preferably, the HT system comprises further an electric storage system connected to the DC link in series or in shunt.

The disclosed HT systems may be placed throughout a power grid. They may be decentralized balancing means.

Examples, alternatives, advantages and other explanations for some of these aspects are explained at other parts of this disclosure.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1a shows an exemplary HT according to an embodiment of the present disclosure.
Fig. 1b shows another exemplary HT according to an embodiment of the present disclosure.
Fig. 2 shows the HT with a controller according to an embodiment of the present disclosure.
Fig. 3 shows a flowchart of a method applied by the HT and controller, for example as shown in fig. 2, according to an embodiment of the present disclosure.
Fig. 4 shows different embodiments of the present disclosure for the DC link attached between the shunt connected converter and the current connected converter.

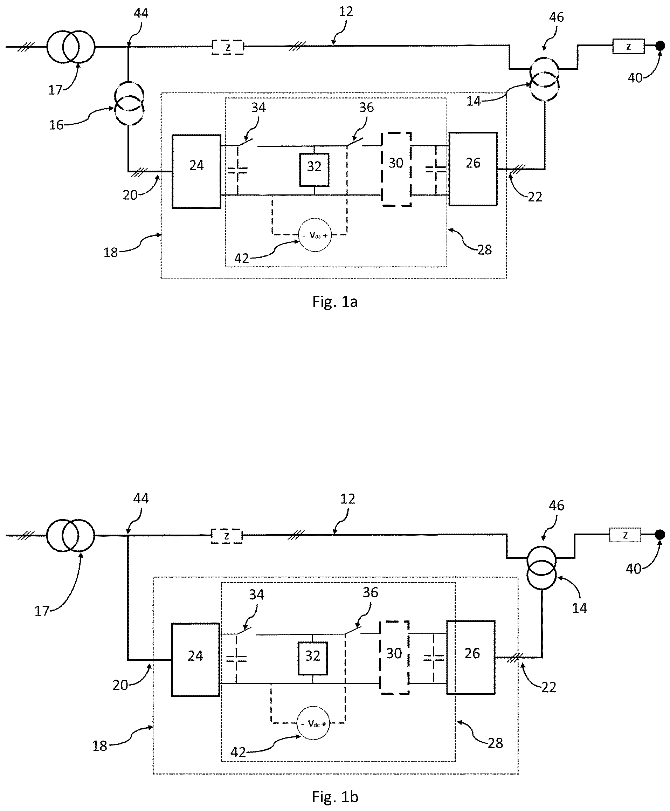

Fig. 1a shows an exemplary HT 10 and a distribution transformer 17. The hybrid transformer (HT) 10 comprises an electric line 12 with a plurality of phases, a first transformer 14 connected to the electric line 12 in series, a second transformer 16, and a converter module 18 connected on a first side 20 to the electric line 12 in shunt and the second transformer 16, and a second side 22 of the converter module 18, opposite to the first side 20, being connected to the first transformer 14.

The converter module 18 comprises a shunt connected converter 24 with an alternating current (AC) side (to the left, towards the second transformer 16) which is the first side 20 of the converter module 18, and the converter module 18 further comprises a series connected converter 26 with an AC side (to the right, towards the first transformer 14) of the series connected converter 26 which is the second side 22 of the converter module 18 , wherein a direct current (DC) side of the shunt connected converter 24 (to the right) is connected to a DC side of the series connected converter 26 (to the left) by a DC link 28.

The DC link 28 comprises a DC/DC converter 30 connected to the DC link in series. In an alternative, the DC/DC converter 30 may be connected in shunt. The DC link 28 further comprises an electric storage system (ESS) 32 connected to the DC link with or without a dedicated DC-DC converter in series or in shunt. The HT 10 further comprises a switch 34 which is connected in the DC link 28 in series. The switch 34 is optional. The switch 34 may be placed at another place in the DC link 28 between the shunt connected converter 24 and the series connected converter 26. The HT 10 further comprises switch 36. The switch 36 is similar to switch 34 optionally placed in the DC link. The DC link 28 may further comprise one or both of capacitors in parallel with the shunt connected converter 24 and the series connected converter 26 on either side of the DC/DC converter 30, respectively.

The electric line 12 has three phases shown by the three diagonal lines in the electric line 12 in this figure. The impedance (z) of the electric line 12 is also shown in this figure as separate part. The electric line 12 extends from the variable transformer 38 (on the left) to the node 40 (on the right). In some embodiments, the electric line may further extend beyond the variable transformer 38 (on the left) and/or beyond the node 40 (on the right). In some embodiments, the electric line 12 may not be regarded as part of the HT 10, but the HT 10 would be (configured to be) connected to the electric line 12. On the other side of the variable transformer 38 as seen from the shunt connection, the variable transformer 38 may be connected to a grid, in this example a MV grid. On the outer side of the node 40, it is connected to another grid, in this example a LV grid. In other examples, the grids may be different, for example, the shown MV grid may be a HV grid, and the shown LV grid may be a MV grid.

The shunt connected converter 24 and the series connected converter 26 may be a different or the same kind of AC/DC converter. Possible products/applications are: statcom (static synchronous compensator), rectifiers, active filters, etc..

The first transformer 14 at the shown position is optional. The second transformer 16 may be omitted. In alternatives, the shunt connected converter 24 may be connected directly to the electric line 12 in shunt. In this figure, the shunt connected converter 24 is connected to the electric line 12 in shunt by being connected to the second transformer 16 which is connected to the electric line 12 in shunt. The distribution transformer 17 is connected to the electric line 12 on a side opposite to the first transformer 14 of where the shunt connected converter 24 is connected in shunt.

The first transformer 14 may be connected to the electric line 12 in series in different ways. In some embodiments, one winding (possibly being three windings due to the plurality of phases) of the first transformer 14 is connected to the electric line 12 in series, such that the one winding could be regarded as part of the electric line 12 just wound. The other winding (possibly being three windings due to the plurality of phases) of the first transformer 14 is at one end connected to the series connected converter 26 and the other end is connected to a node (may be different to node 40; may be a node with no further connections to it) - wherein the node has a plurality (maybe three) ends connected to it due to the plurality of phases.

The first PCC 44 is where the shunt connected converter 24 is connected to the electric line 12 in shunt. The first PCC 44 may be on the electric line 12. The first PCC 44 may be at the point of the shunt connection, or just towards the first transformer 14 (just a little to the right), or just away from the first transformer 14 (just a little to the left). The position of the first PCC 44 (just as for the second PCC 46) may be regarded as identical on any point along an uninterrupted conductor, wherein uninterrupted may mean without other electrical components and without nodes. It is noted that the current and/or voltage values at these different positions of the first PCC 44 can be calculated from each other. For example, the current just right of the position of the shunt connection is equal to the current just left of the shunt connection plus the injection current coming from the shunt connected converter 24/ the second transformer 16 (when present as shown in this figure).

The second PCC 46 is where the first transformer 14 is connected to the electric line 12. The second PCC 46 may be on the electric line 12 just on either side of the first transformer 14.

Corresponding voltage measurement devices and/or current measurement devices may be comprised, at the first PCC 44 and/or the second PCC 46, to measure the first voltage, second voltage and/or first current, respectively.

The HT 10 may further comprise a voltage measurement device 42. The voltage measurement device 42 measures a voltage in the DC link 28, for example of the ESS 32. In some embodiments, the DC link 28 may only be the conductors, without the ESS 32 and DC/DC converter 30.

In some embodiments, the DC-link 28 may be connected to a separate DC grid, i.e., the HT serves as the interface between the AC and DC grids.

The ESS 32 may comprise one or more of the following: one or more capacitors, one or more batteries, one or more super caps, one or more super batteries, and any other energy storage element.

Fig. 1b shows another exemplary HT according to an embodiment of the present disclosure. The HT of fig. 1b is mostly similar to the HT of fig. 1a. For similarities, it is kindly referred to the description of fig. 1a. The HT of fig. 1b is different from the HT of fig. 1a in that there is no second transformer 16. In fig. 1b, the shunt connected converter 24 is directly connected to the electric line 12 in shunt.

In fig. 1a, the shunt connected converter 24 is connected to the electric line 12 in shunt by being connected to the second transformer 16 which is connected to the electric line 12 in shunt.

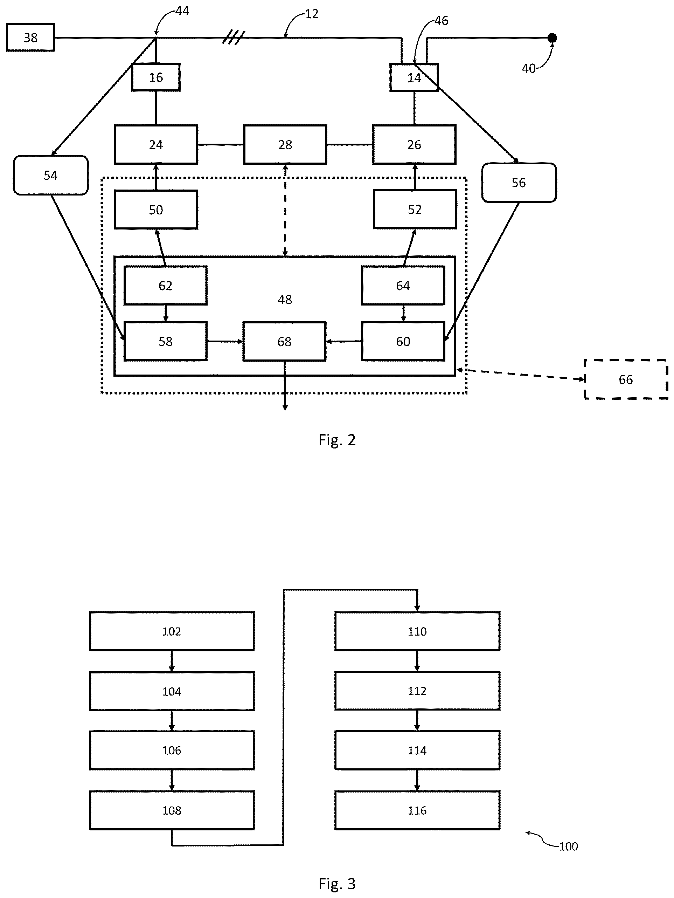

Fig. 2 shows the HT 10 with a controller. Fig. 3 shows a flowchart of a method 100 applied by the HT 10 and a controller, for example as shown in fig. 2.

Fig. 2 shows a simplified drawing of the HT 10 and a controller. The HT 10 may be as described above (also for fig. 1). To avoid repetitions, the disclosure from above is herewith included also here (same reference numerals in fig. 2 may indicate the same entities as in fig. 1). The controller (shown as dotted line around other entities) comprises a master controller 48, a first low-level controller 50 and a second low-level controller 52. The master controller 48 comprises two perturbation generators 62 and 64. The two perturbation controllers 62 and 64 may be one perturbation controller. The master controller 48 further comprises a post processing unit 68. In some embodiments, the post processing unit 68 may be a more general controller which also provides instructions and/or information to the two perturbation generators 62 and 64.

The master controller 48 may further comprise a central coordination controller (not shown) which coordinates the perturbations, and/or the measurements and processing of the measurements, and possibly a coordination of these. The post processing unit 68 may be the central coordination controller. Further, first measurements 54 from the first PCC 44 and second measurements 56 form the second PCC 46 are shown. The first measurements 54 may be examples of the first voltage. The second measurements 56 may be examples of the second voltage and/or first current. The master controller 48 comprises two FFT (fast Fourier transformation) transforming units 58 and 60. Alternatively, a similar computation method delivering a similar output as FFT, and corresponding units (58 and 60) may be used. The master controller 48 may also control the DC link 28. Fig. 2 further shows a high-level controller (e.g. a grid controller 66) to be described below with reference to fig. 3.

Method 100, shown in fig. 3, may be applied by the devices of fig. 2. Method 100 may be used to determine impedance and/or admittance at the electric line 12. The method 100 may comprise steps 102 to 116, preferably in that order.

In step 102, a perturbation reference is generated at the first perturbation generator 62 and/or the second perturbation generator 64 with desired frequency and magnitude. A sequence of perturbation signals may be generated to scan the system in a wide range of frequencies.

In step 104, the corresponding perturbation reference is provided to the first low-level controller 50 from the first perturbation generator 62 and/or to the second low-level controller 52 from the second perturbation generator 64.

In step 106, the low-level controllers 50 and 52, make sure that the corresponding perturbation reference is translated to the desired gate signals that are applied to the shunt connected converter 24 and series connected converter, respectively. As a result, a perturbation in form of current injections and voltage injections are created.

In step 108, one or more electric perturbations are generated in the electric line 12 according to the perturbation references.

In step 110, the first voltage, the second voltage and/or the first current are measured. Step 110 may also or alternatively be: obtaining: a first voltage of the electric line at a first point of common coupling (PCC) where the shunt connected converter module is connected to the electric line in shunt, wherein the first voltage is influenced by the one or more electric perturbations, a second voltage of the electric line at a second PCC, where the first transformer is connected to the electric line, wherein the second voltage is influenced by the one or more electric perturbations, and/or a first current of the electric line at the second PCC, wherein the first current is influenced by the one or more electric perturbations.

In step 112, a numerical method is applied to transform the perturbation signal (or perturbation reference) and measured quantity (first voltage, second voltage and/or first current; 54 and/or 56) to the desired domain by the FFT transforming units 58 and 60, respectively. In this case, the fast Fourier transform is used to transform the original signals from the time to frequency domain.

In some embodiments, two G-dq0 units (which may be bundled into one G-dq0 unit), may be comprised by the controller. The G-dq0 units may transform between the mathematical coordinate systems of the three-phase system and the dq0 system. Transformations between other mathematical systems are possible in other embodiments.

The different mathematical coordinate systems may be as in (i) and (ii) below:
(i) If in the three-phase system (may be denoted as "G"): they can be a prescribed set of balanced three-phase waveform with identical magnitude, frequency, and phase angles that are displace by 120 degrees from each other.
(ii) If in the dq0 system: they can be provided by three DC quantities, and frequency and one phase angle information. The phase angle information may be information that define the angle alignment and rotation speed of the dq-coordinates.

Overall, the signal/references may take different forms depending on the adopted coordinate system, nonetheless when transformed to the three-phase system they would indicate a set of three-phase balanced electrical voltage or current waveforms.

In step 114, the transformed data is post processed in the post processing unit 68 to obtain the desired parameters.

In step 116, the perturbation reference and measured data are used to determine, for example estimate: the grid impedance and/or admittance. The determination can be coordinated between different grid assets or initiated by the system operator or network control. Step 116 may also or alternatively be determining an impedance and/or an admittance based on at least one of the one or more electric perturbations, and the obtained one or more of the first voltage, the second voltage and the first current.

In a first embodiment, generating one or more electric perturbations in the electric line 12 is done via the series connected converter 26, wherein the one or more electric perturbations are one or more voltage injections; and determining the admittance is based only on the obtained first current and a voltage information. Preferably, only the admittance is determined, and the impedance is not determined. In this first embodiment, only part of (each of) the steps of method 100 is implemented.

In this first embodiment, the perturbation signal is generated with desired frequency and magnitude by the second perturbation generator 64 (corresponding to step 102). Typically, a sequence of perturbation signals is generated to scan the system in a wide range of frequencies. The perturbation reference is provided to the second low-level controller 52 from the second perturbation generator 64 (corresponding to step 104). The second low-level controller 52 makes sure that the perturbation reference is translated to the desired gate signals that are applied to the series connected converter 26 (corresponding to step 106). As a result, a voltage component corresponding to the defined perturbation is created through the series connected converter 26 and preferably through the first transformer 14. Then the current flow is measured as first current that is induced due to the perturbation voltage injection at the same frequency range (corresponding to step 110). Then, a numerical method is applied to transform the perturbation signal and measured quantity to the desired domain (corresponding to step 112). In this case, the fast Fourier transform is used to transform the original signals from the time to frequency domain by the second FFT transform unit 60. Then, the transformed data is post processed to obtain the desired parameters by post processing unit 68 (corresponding to step 114). Then, the admittance is determined. In this case, the perturbation voltage and measured current can be used to estimate the grid admittance.

In a second embodiment, generating one or more electric perturbations in the electric line is done via the shunt connected converter, wherein the one or more electric perturbations are one or more current injections; and wherein determining the impedance is based only on the obtained first voltage and/or second voltage, and a current information. In this second embodiment, only part of (each of) the steps of method 100 is implemented.

In this second embodiment, the perturbation signal is generated with desired frequency and magnitude by the first perturbation generator 62 (corresponding to step 102). Typically, a sequence of perturbation signals is generated to scan the system in a wide range of frequencies. The perturbation reference is provided to the first low-level controller 50 from the first perturbation generator 62 (corresponding to step 104). The first low-level controller 50 makes sure that the perturbation reference is translated to the desired gate signals that are applied to the shunt connected converter 24 (corresponding to step 106). As a result, a current component corresponding to the defined perturbation is created through the shunt connected converter 24 and possibly through the second transformer 16. Then the voltage flow is measured as first voltage and/or second voltage that is induced due to the perturbation current injection at the same frequency range (corresponding to step 110). Then, a numerical method is applied to transform the perturbation signal and measured quantity to the desired domain (corresponding to step 112). In this case, the fast Fourier transform is used to transform the original signals from the time to frequency domain by the first FFT transform unit 58. Then, the transformed data is post processed to obtain the desired parameters by post processing unit 68 (corresponding to step 114). Then, the impedance is determined. In this case, the perturbation current and measured voltage can be used to estimate the grid impedance.

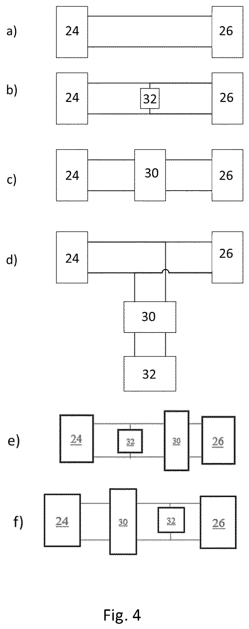

Fig. 4 shows different embodiments for the DC link 28 attached between the shunt connected converter 24 and the current connected converter 26. Any of these embodiments may replace the shown DC links 28 in the HTs 10 disclosed. In embodiment a), the DC link is only the conductors. In embodiment b), an ESS 32 is connected in parallel to the converter. In embodiment c), a DC/DC converter 30 is connected between the converter 24 and 26. In embodiment d), an ESS 32 and a DC/DC converter 30 are connected in shunt to the DC link 28. In embodiments e) and f), an ESS 32 and a DC/DC converter 30 are connected in parallel to the converters; in embodiment e) with the ESS 32 closer to the shunt connected converter 24; and in embodiment f) with the DC/DC converter 30 closer to the shunt connected converter 24.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements.

Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for controlling a hybrid transformer, HT, comprising an electric line with a plurality of phases, a first transformer connected to the electric line in series, and a converter module connected on a first side to the electric line in shunt, and a second side of the converter module, opposite to the first side, being connected to the first transformer;
wherein the converter module comprises a shunt connected converter with an alternating current, AC, side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link, the method comprising:
generating one or more electric perturbations in the electric line;
obtaining:
a first voltage of the electric line at a first point of common coupling, PCC, where the shunt connected converter module is connected to the electric line in shunt, wherein the first voltage is influenced by the one or more electric perturbations,
a second voltage of the electric line at a second PCC, where the first transformer is connected to the electric line, wherein the second voltage is influenced by the one or more electric perturbations, and/or
a first current of the electric line at the second PCC, wherein the first current is influenced by the one or more electric perturbations; and
determining an impedance and/or an admittance based on at least one of the one or more electric perturbations, and the obtained one or more of the first voltage, the second voltage and the first current.

2. Method of claim 1, wherein the one or more electric perturbations are a sequence of perturbations, and wherein each perturbation of the sequence of perturbations has a different frequency.

3. Method of claim 1 or 2, wherein the one or more electric perturbations have a magnitude of 5% or less of a converter rating of the shunt connected converter and/or the series connected converter.

4. Method of any one of claims 1 to 3, the method further comprises:
providing the determined impedance and/or admittance to a another device different to the HT; and
controlling a grid to which the HT and the another device are connected by the another device based on the provided impedance and/or admittance.

5. Method of any one of claims 1 to 4, wherein the shunt connected converter is connected to the electric line in shunt by being connected to a second transformer which is connected to the electric line in shunt.

6. Method of any one of claims 1 to 5, wherein generating one or more electric perturbations in the electric line is done via the shunt connected converter, wherein the one or more electric perturbations are one or more current injections; and
wherein determining the impedance is based only on the obtained first voltage and/or second voltage, and a current information.

7. Method of any one of claims 1 to 6, wherein generating one or more electric perturbations in the electric line is done via the series connected converter, wherein the one or more electric perturbations are one or more voltage injections; and
wherein determining the admittance is based only on the obtained first current and a voltage information.

8. A computer program comprising instructions which, when the computer program is executed by a computer, cause the computer to carry out the method of any one of claims 1 to 7.

9. A hybrid transformer, HT, system comprising:
an electric line with a plurality of phases;
a first transformer connected to the electric line in series;
a converter module connected on a first side to the electric line in shunt, and on a second side of the converter module, opposite to the first side, to the first transformer; and
a controller;
wherein the converter module comprises a shunt connected converter with an alternating current, AC; side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link;
wherein the controller is configured to:
generate one or more electric perturbations in the electric line;
obtain
a first voltage of the electric line at a first point of common coupling, first PCC, where the shunt connected converter module is connected to the electric line in shunt, wherein the first voltage is influenced by the one or more electric perturbations,
a second voltage of the electric line at a second point of common coupling, second PCC, where the first transformer is connected to the electric line, wherein the second voltage is influenced by the one or more electric perturbations, and/or
a first current of the electric line at the second PCC, wherein the first current is influenced by the one or more electric perturbations; and
determine an impedance and/or an admittance based on the one or more electric perturbations, and the obtained one or more of the first voltage, the second voltage and the first current.

10. HT system of claim 9, wherein the shunt connected converter is connected to the electric line in shunt by being connected to a second transformer which is connected to the electric line in shunt.

11. HT system of claim 9 or 10, further comprising a DC/DC converter connected to the DC link in series or in shunt.

12. HT system of any one of claims 9 to 11, further comprising an electric storage system connected to the DC link in series or in shunt.
